Europäisches Patentamt

European Patent Office

Office européen des brevets

(19)

(11) Numéro de publication: **0 005 085 B1**

(12) **FASCICULE DE BREVET EUROPEEN**

(21) Numéro de dépôt: **79400072.9**

(22) Date de dépôt: **05.02.79**

(51) Int. Cl.³: **B 60 G 7/02, B 60 G 21/04**

(54) **Train avant pour véhicule automobile.**

(30) Priorité: **18.04.78 FR 7811299**

(43) Date de publication de la demande:
**31.10.79 Bulletin 79/22**

(45) Mention de la délivrance du brevet:
**18.03.81 Bulletin 81/11**

(84) Etats Contractants Désignés:
**DE GB IT**

(56) Documents cités:
**FR - A - 2 150 479**
**FR - A - 2 152 852**
**FR - A - 2 156 834**
**FR - A - 2 369 108**
**US - A - 2 964 331**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES CITROEN**
**117 à 167, Quai André Citroen**
**F-75747 Paris Cedex 15 (FR)**

(72) Inventeur: **Froumajou, Armand**
**Rue Laennec**
**F-95520 Osny (FR)**

(74) Mandataire: **Moncheny, Michel et al,**
**c/o Cabinet Lavoix 2 Place d'Estienne d'Orves**
**F-75441 Paris Cedex 09 (FR)**

Courier Press, Leamington Spa, England.

# Train avant pour véhicule automobile

La présente invention concerne les agencements de trains avant pour véhicules automobiles et notamment pour véhicules à traction avant.

Elle se rapporte plus précisément à un train avant à suspension à roues indépendantes, comprenant des éléments de guidage inférieur constitués par un bras transversal et un bras oblique. Elle s'applique plus particulièrement aux suspensions connues sous le nom de suspension du type MAC PHERSON.

On connait d'après le brevet français FR—A—21 56 834 un train avant présentant cette configuration et dans lequel le bras transversal inférieur est articulé sur une traverse en U disposée entre deux longerons. Cependant la traverse est contenue dans un plan horizontal et le bras transversal est articulé immédiatement sous la traverse de sorte qu'il est impossible de ménager un espace libre suffisant, permettant l'implantation des organes de transmission, et qu'une telle configuration ne convient en aucun cas pour un véhicule à traction avant.

On sait en effet que sur un véhicule à traction avant, principalement lorsque le moteur est disposé transversalement, les longerons doivent être relevés au droit du train avant pour laisser la place aux organes de transmission. On est alors conduit à prévoir un berceau sous ces longerons pour tenir les éléments de la suspension, un tel berceau présentant l'inconvénient d'être lourd et coûteux.

Le but de cette invention est donc de fournir une solution permettant de fixer les éléments de suspension grâce à des moyens plus simples, procurant ainsi des gains de poids et de prix appréciables.

L'invention s'applique à un train avant pour véhicule automobile comprenant deux longerons faisant partie de la structure du véhicule, des éléments de guidage inférieur pour chaque roue, comportant un bras transversal monté oscillant autour d'un axe longitudinal, un bras oblique et un support des éléments de guidage inférieur des roues constitué par une traverse en U fixée sous les longerons.

Ce train est caractérisé notamment en ce que la traverse en U est contenue dans un plan à peu près vertical et il est prévu deux tirants reliant la traverse à la structure, chaque tirant étant prolongé, au-delà de la traverse, par un tourillon constituant l'articulation du bras transversal correspondant.

Un exemple de réalisation de l'invention fait l'objet de la description qui suit, en référence aux dessins joints dans lesquels:

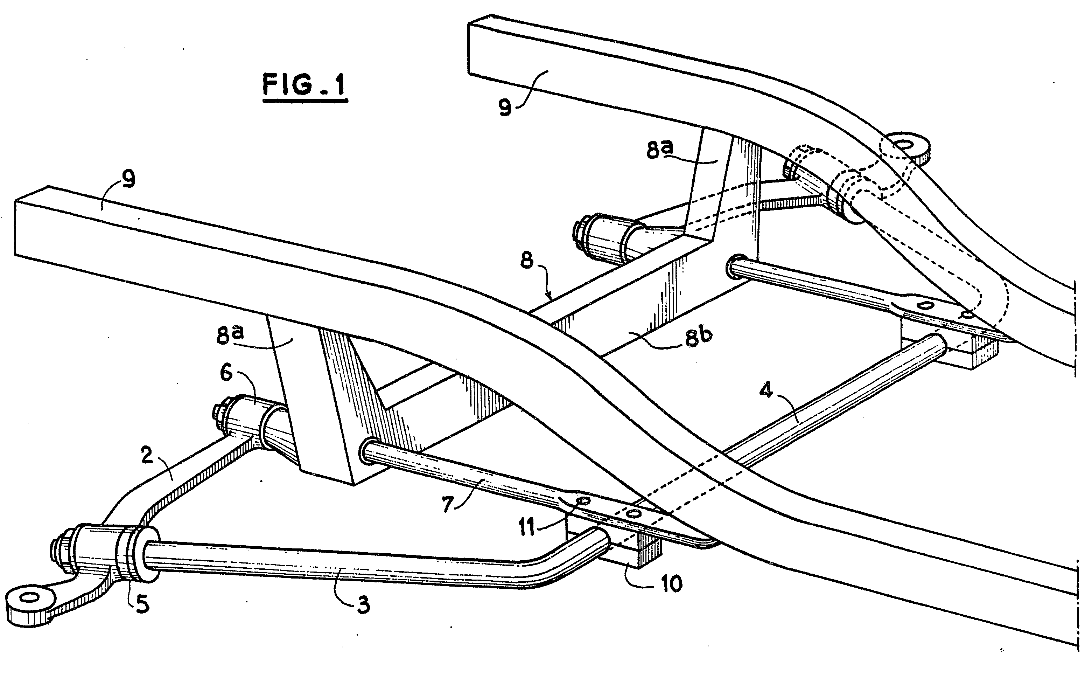

— la Fig. 1 est une vue en perspective des parties essentielles du train suivant l'invention;

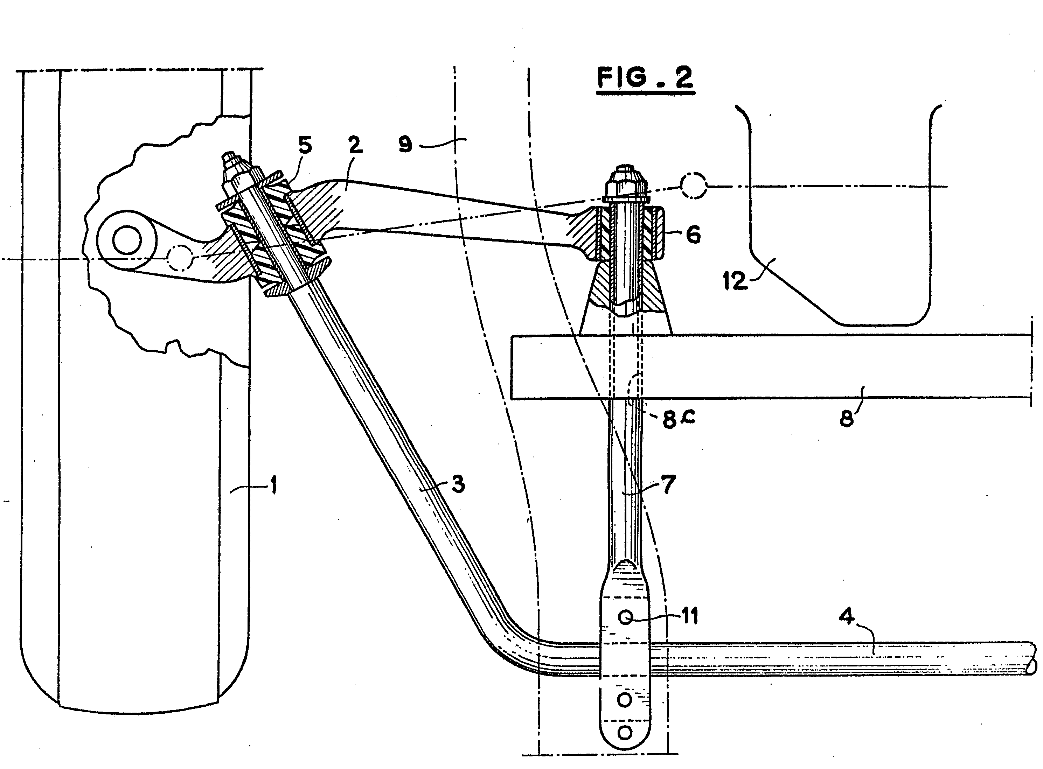

— la Fig. 2 est une vue en plant montrant la moitié du train.

On a représenté, sur les Fig. , une partie d'un train avant comprenant deux roues 1 dont les éléments de guidage inférieur sont constitués pour chaque roue par un bras transversal 2 et un bras oblique 3. Ce dernier constitue un tronçon d'un stabilsateur transversal 4 à barre de torsion. Les bras 2 et 3 sont reliés entre eux par une articulation 5.

L'extrémité du bras 2 opposée à la roue 1 est portée par une articulation 6 sur l'extrémité d'une barre 7. Cette dernière est portée par une traverse en U 8 fixée sous des longerons 9 faisant partie de la structure du véhicule. La traverse 8 est disposée de telle façon que les branches du U sont contenues dans un plan vertical ou à peu près vertical, les extrémités de ces branches 8a étant fixées aux longerons 9 tandis que la barre 7 s'étend dans un logement 8c à peu près au niveau des jonctions entre les branches 8a et l'âme 8b. La barre 7 est par ailleurs prolongée, du côté de la traverse 8 opposée à l'articulation 6, jusqu'au longeron 9 auquel elle est fixée (par exemple par soudure ou moyen équivalent) pour constituer un tirant maintenant la traverse 8.

La barre stabilisatrice 4 est portée par des paliers 10 fixés par des boulons 11 sous chacune des barres 7.

Le train ainsi réalisé, qui est complété par des organes classiques, non représentés, offre notamment les avantages suivants:

— il est particulièrement léger tout en étant robuste;

— la disposition en porte-à-faux de l'articulation 6 permet de maintenir le bras 2 dans un plan à peu près transversal, ce qui est souhaitable pour obtenir un bon guidage de la roue, tout en ayant une traverse 8 déportée vers l'arrière pour laisser la place aux organes de transmission, comme le différentiel 12.

Dans une variante de réalisation, les barres 7 peuvant être fixées sur les longerons 9 par les boulons 11 de maintien des paliers 10 de la barre stabilisatrice 4.

## Revendications

1. Train avant pour véhicule automobile, comprenant deux longerons (9) faisant partie de la structure du véhicule, des éléments de guidage inférieur pour chaque roue, comportant un bras transversal (2) monté oscillant autour d'un axe longitudinal, un bras oblique (3) et un support des éléments de guidage inférieur des roues (1) constitué par une traverse en U fixée sous les longerons, caractérisé en ce que la traverse en U (8) est contenue dans un plan à peu près vertical et il est prévu deux tirants (7) reliant la traverse à la structure, chaque tirant étant prolongé, au-delà de la traverse, par un tourillon constituant l'articulation (6) du bras transversal (2) correspondant.

2. Train avant suivant la revendication 1, caractérisé en ce que la traverse (8) est fixée aux longerons (9) par les extrémités de ses branches (8a).

3. Train avant suivant l'une quelconque des revendications 1 et 2, caractérisé en ce que chaque tirant (7) est constitué par une barre fixée à une extrémité sur le longeron (9) associé et s'étendant dans un logement de la traverse en U.

4. Train avant suivant l'une quelconque des revendication 1 à 3, caractérisé en ce que chaque tirant (7) porte un palier (10) de support d'une barre de torsion (4) formant stabilisateur transversal et dont un tronçon constitue, ainsi qu'il est connu, ledit bras oblique.

5. Train avant suivant la revendication 4, caractérisé en ce que chaque tirant (7) est fixé sur le longeron associé par les mêmes organes qui servent à la fixation du palier (10) de support de la barre de torsion.

6. Train avant suivant l'une quelconque des revendications 2 à 5, caractérisé en ce que, comme connu en soi, la partie avant des longerons est relevée.

## Claims

1. Front set of wheels for an automobile vehicle, comprising two side-frames (9) which are part of the structure of the vehicle, lower guide means for each wheel which guide means comprise a transverse arm (2), an oblique arm (3) and a support for the lower guide means of the wheels (1) comprising a U-shaped cross-member fixed under the side-frames, characterized in that the U-shaped cross-member (8) is contained in a substantially vertical plane and two ties (7) are provided connecting the cross-member to the structure of the vehicle, each tie being extended beyond the cross-member in the form of a journal on which the corresponding transverse arm (2) is pivoted.

2. Front set of wheels as claimed in claim 1, characterized in that end portions of two branches (89) of the U-shaped cross-member (8) are fixed to the side-frames (9).

3. Front set of wheels as claimed in claim 1 or 2, characterized in that each tie (7) comprises a bar which is fixed at one end thereof to the associated side-frame (9) and extends through an aperture in the U-shaped cross-member.

4. Front set of wheels as claimed in anyone of claims 1 to 3, characterized in that each tie (7) carries a bearing (10) for supporting a torsion bar (4) constituting a transverse stabilizer and having as known per se portions thereof which define said oblique arms.

5. Front set of wheels as claimed in claim 4, characterized in that it comprises means fixing each tie (7) to the associated side-frame and moreover fixing the bearing (10) supporting the torsion bar.

6. Front set of wheels as claimed in anyone of claims 2 to 5, characterized in that, as known per se, the side-frames have a raised front part.

## Patentansprüche

1. Vorderachse für Kraftfahrzeuge mit zwei Teil des Fahrzeugaufbaues bildenden Längsträgern (9), mit Teilen zur unteren Führung für jedes Rad, die einen um eine Längsachse schwenkenden Querlenker, einen Schräglenker (3) und eine Abstützung für die Elemente zur unteren Führung der Räder (1), welche durch einen U-förmigen, unter den Längsträgern befestigten Querträger (8) gebildet ist, umfassen, dadurch gekennzeichnet, daß der U-förmige Querträger (8) in einer im wesentlichen vertikalen Ebene liegt, und daß zwei den Querträger mit dem Fahrzeugaufbau verbindende Zugstreben (7) vorgesehen sind, von denen sich jede über den Querträger hinaus in einen Wellenzapfen fortsetzt, der das Gelenk (6) des zugehörigen Querlenkers (2) bildet.

2. Vorderachse nach Anspruch 1, dadurch gekennzeichnet, daß der Querträger (8) mit den Enden seiner Schenkel (8a) an den Längsträgern (9) befestigt ist.

3. Vorderachse nach einem der Ansprüche 1 und 2, dadurch gekennzeichnet, daß jede Zugstrebe (7) durch einen an einem Ende am zugehörigen Längsträger (9) befestigten und sich in einen Sitz des U-förmigen Querträgers erstreckenden Stab gebildet ist.

4. Vorderachse nach einem der Ansprüche 1 bis 3, dadurch gekennzeichnet, daß jede Zugstrebe (7) ein Stützlager (10) für einen Torsionsstab (4) trägt, der einen Querstabilisator bildet und dessen Ende in bekannter Weise den Schräglenker darstellt.

5. Vorderachse nach Anspruch 4, dadurch gekennzeichnet, daß jede Zugstrebe (7) am zugehörigen Längsträger mit den gleichen Elementen, die auch zur Befestigung des Stützlagers für den Torsionsstab dienen, befestigt ist.

6. Vorderachse nach einem der Ansprüche 2 bis 5, dadurch gekennzeichnet, daß in an sich bekannter Weise der vordere Abschnitt der Längsträger geschweift ist.

FIG.1

FIG.2